# EUROPÄISCHE PATENTSCHRIFT

(11) **EP 0 938 231 B1**
(45) Veröffentlichungstag und Bekanntmachung des Hinweises auf die Patenterteilung: **17.12.2003**
(21) Anmeldenummer: 99890036.9
(22) Anmeldetag: 02.02.1999
(51) Int. Cl.: H04N 5/335

(54) **Verfahren und Anordnung zur Aufnahme und Auswertung von Bildern eines Gegenstandes**
Method and device for recording and analysing images of an object
Procédé et arrangement pour l'enregistrement et l'exploitation d'images d'un objet

(30) Priorität: 06.02.1998 AT 21898
(43) Veröffentlichungstag der Anmeldung: 25.08.1999
(73) Patentinhaber: ÖSTERREICHISCHES FORSCHUNGSZENTRUM SEIBERSDORF GES.M.B.H., 2444 Seibersdorf (AT)
(72) Erfinder: Mayer, Konrad Dipl.Ing., 1230 Wien (AT); Krattenthaler, Werner Dr., 2346 Maria Enzersdorf-Südstadt (AT); Rubik, Michael Dipl.Ing., 1130 Wien (AT)
(74) Vertreter: Wildhack, Helmut, Dr. Dipl.-Ing.

(56) Entgegenhaltungen:
- EP-A- 0 858 208
- GB-A- 2 096 427
- US-A- 4 876 590
- US-A- 5 325 449

## Beschreibung

Die Erfindung betrifft ein Verfahren gemäß dem Oberbegriff des Patentanspruches 1. Des weiteren betrifft die Erfindung eine Anordnung, insbesondere zur Durchführung dieses Verfahrens, gemäß dem Oberbegriff des Patentanspruches 11.

Verfahren und Anordnungen prinzipiell ähnlicher Art, aber für andere Zwecke und mit anderer Vorgangsweise bzw. mit unterschiedlich aufgebauten Einrichtungen, sind aus der DE-C2-40 02 298 und der WO 93/23823 bekannt.

Bei dem eingangs genannten Verfahren bzw. bei Anordnungen zur Durchführung dieses Verfahrens besteht das Problem, daß eine Vielzahl von Bildsignalen auszuwerten ist, womit die vorhandenen Speicherkapazitäten zumeist überlastet sind bzw. die Auswertung sehr lange dauert. Bei der Überprüfung von Gegenständen spielt der Zeitfaktor mitunter jedoch eine große Rolle, sodaß an die Schnelligkeit der Auswertung hohe Ansprüche gestellt werden, gleichzeitig jedoch die Sicherheit der Auswertung möglichst wenig beeinträchtigt werden soll. Darüberhinaus sollen für die Auswertung der Bilder den Gegenstand entsprechend gut wiedergebende Bilder zur Verfügung stehen, welche bei unterschiedlichen Auswertungsarten allen Ansprüchen gerecht werden müssen. Diese Ziele werden bei einem Verfahren der eingangs genannten Art mit den im Kennzeichen des Anspruches 1 angeführten Merkmalen erreicht. Eine Anordnung gemäß dem Oberbegriff des Patentanspruches 11 ist erfindungsgemäß mit den im Kennzeichen des Anspruches 11 angeführten Merkmalen charakterisiert.

Um nunmehr eine ausreichende Anzahl von auswertbaren Bildern vorliegen zu haben, werden erfindungsgemäß ein Intensitätsbild hoher Auflösung und des weiteren zumindest ein Farbcharakteristikbild mit niedriger Auflösung zur Verfügung gestellt. Je nach Bedarf kann auch mehr als ein Farbcharakteristikbild aufgenommen und zur Verfügung gestellt werden; es zeigte sich, daß es ausreicht, nur ein Intensitätsbild hoher Auflösung für die Auswertung zur Verfügung zu haben, da man aus Erfahrung weiß, daß Abweichungen in der Farbe mit geringerer Auflösung wahrgenommen werden können als Abweichungen in der Intensität.

Wie in Anspruch 2 erwähnt, kann die Anzahl der Kameras, mit denen die Bilder aufgenommen werden, je nach Bedarf zur Erhöhung der Vielfältigkeit der Auswertungsmöglichkeiten gewählt werden. Vorteilhafterweise wird gemäß Anspruch 3 oder 4 vorgegangen, da diese Vorgangsweisen leicht gangbar sind und mit einfachen Methoden genaue Bilder mit der gewünschten Auflösung des Gegenstandes erhalten werden können. Es wird eine platzsparende Anordnung erreicht, wenn die Filter vor den Kameraobjektiven angeordnet und leicht auswechselbar sind. Die Einjustierung der Kameras wird bei einem Filtertausch nicht verändert.

Um die erforderlichen Speicherkapazitäten gering zu halten, ist es vorteilhaft, wenn gemäß Anspruch 6 vorgegangen wird bzw. wenn die Reduktion vor der Verknüpfung der Bildsignale vorgenommen wird, da damit der Rechenaufwand beträchtlich herabgesetzt werden kann.

Wenn gemäß den Merkmalen der Ansprüche 8 bzw. 9 vorgegangen wird, erhält man mit einfachen Vorgaben gut reproduzierbare und ausreichend genaue Resultate.

Probleme, die sich dadurch ergeben, daß dieselben Punkte des Gegenstandes auf den Sensorchips der einzelnen Kameras in jeweils verschiedenen Positionen abgebildet werden, werden ausgeräumt, wenn gemäß Anspruch 10 vorgegangen wird. Von Vorteil kann es dabei sein, wenn nur eine reduzierte Anzahl von Bildsignalen der Positionstransformation unterworfen werden muß.

Alternative Ausführungsformen von erfindungsgemäßen Anordnungen sind in den Ansprüchen 13 und 14 angeführt.

Diese Anordnungen sind einfach und betriebssicher aufgebaut und ermöglichen auch bei sich gegenüber der Kamera relativ schnell bewegenden Gegenständen eine exakte Aufnahme und Auswertung von Bildern des Gegenstandes.

Vorteilhaft ist eine Anordnung gemäß Anspruch 16, mit der die gegenseitige Zuordnung von auf die Sensorchips der einzelnen Kameras abgebildeten, identen Gegenstandspunkten vorgenommen werden kann.

Weitere Ausführungsformen der Erfindung sind der folgenden Beschreibung, den Patentansprüchen und der Zeichnung zu entnehmen.

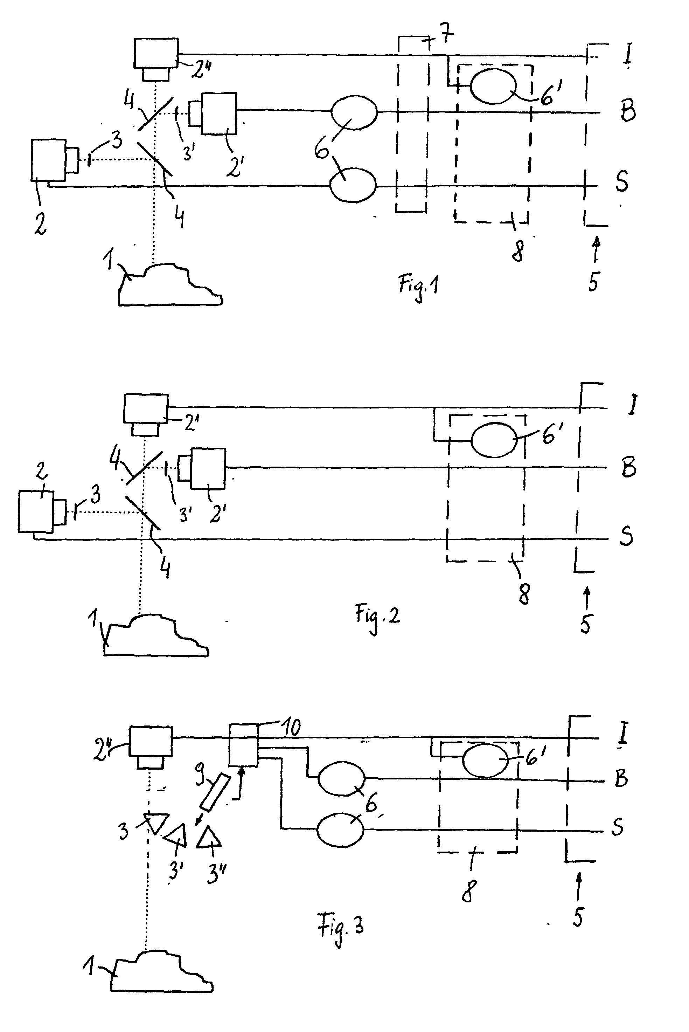

Im folgenden wird die Erfindung anhand der Zeichnung beispielsweise näher erläutert. Fig. 1,2 und 3 zeigen verschiedene Anordnungen zur Aufnahme und Auswertung von Bildern eines Gegenstandes.

Gemäß der Anordnung in Fig. 1 wird von einem Gegenstand 1 mit einer Anzahl von Kameras 2,2' und 2" jeweils zumindest ein Bild aufgenommen. Bei den Kameras handelt es sich um Grauwert-Kameras mit üblichen Sensorchips, mit denen von einem Bereich des Gegenstandes 1 ein Bild aufgenommen wird. Es muß sich dabei nicht unbedingt genau um den selben Bereich des Gegenstandes handeln, sondern die einzelnen aufgenommenen Bilder sollen zumindest einen gemeinsamen Gegenstandsbereich umfassen, der in allen Bildern aufscheint; dieser gemeinsame Gegenstandsbereich kann einer Auswertung unterzogen werden.

Mit den einzelnen Kameras 2,2' und 2" werden Bilder in unterschiedlichen Wellenlängen- bzw. Spektralbereichen aufgenommen. Mit einer Kamera, im vorliegenden Fall mit der Kamera 2", erfolgt die Aufnahme eines das gesamte Farbspektrum umfassenden Bildes bzw. eines Schwarz-Weiß- oder Grauwert-Bildes. Vor den Objektiven der Kameras 2 und 2' sind zur Aufnahme von weiteren Bildern Farbfilter 3,3' angeordnet, die für unterschiedliche Wellenlängen- bzw. Spektralbereiche durchlässig sind.

Um mit den einzelnen Kameras 2, 2', 2" im wesentlichen denselben Bereich des Gegenstandes 1 aufnehmen zu können, ist der Lichtweg der vom Gegenstand 1 zur Kamera 2" führt, mit Hilfe von halbdurchlässigen Spiegeln 4 aufgeteilt, sodaß jede der Kameras 2,2', 2" im wesentlichen dasselbe Bild, allerdings in einem anderen Wellenlängen- bzw. Spektralbereich erhält.

Die Anzahl der Kameras wird abhängig von der gewünschten Anzahl der zur Auswertung vorgesehenen, in unterschiedlichen Wellenlängenbereichen aufgenommenen Bilder gewählt. Zumeist werden Bilder des Gegenstandsbereiches in zwei oder mehr unterschiedlichen Wellenlängen- bzw. Spektralbereichen aufgenommen oder es werden ein Grauwertbild, umfassend das Gesamt-Farbspektrum, und zumindest ein weiteres Bild in einem vorgegebenen Wellenlängen- bzw. Spektralbereich aufgenommen. Vorteilhafterweise werden ein Schwarz-Weiß- bzw. Grauwertbild und ein Farbbild in einem bestimmten Wellenlängen- bzw. Spektralbereich aufgenommen. Wesentliches Ziel der Erfindung ist die zur Verfügungstellung eines Intensitätsbildes I mit hoher Auflösung und die Erstellung von zumindest einem Farbcharakteristik-Bild in reduzierter Auflösung, insbesondere eines Bunttonbildes B und/oder eines Sättigungsbildes S. Für die Aufnahme des Intensitätsbildes ist, sofeme es sich um ein Grauwertbild handelt, eine Anordnung eines Filters nicht notwendig.

Wie aus Fig. 1 zu entnehmen, sind alle Bildsignale der Kamera 2" der Auswerteeinheit 5 zugeführt und stehen dort als lntensitätsbild I für eine weitere Verwendung bzw. Auswertung zur Verfügung.

Um den erforderlichen Speicherbedarf zu reduzieren bzw. eine allfällig vorzunehmende elektronische Positionstransformation der Bilder einfacher zu gestalten, ist vorgesehen, daß die Bilder der Kameras 2,2' nur mit einer reduzierten Zahl von Bildsignalen zur Verfügung gestellt werden. Dazu sind den Kameras 2,2' bzw. deren Sensorchips jeweils eine oder eine gemeinsame Reduktionseinheit 6 nachgeschaltet. Eine derartige Reduktionseinheit 6 könnte beispielsweise nur das Bildsignal jedes zweiten Bildpunktes in waagrechter und senkrechter Richtung des Sensorchips der Auswertung zuführen, wodurch die Anzahl der auswertbaren Bildsignale auf ein Viertel verringert wird.

Soferne die aufgenommenen Bilder nicht in identer Weise auf den Sensorchip der einzelnen Kameras 2,2',2" abgebildet werden, werden die Bildsignale der einzelnen Bilder einer elektronischen Positionstransformation in der Positionierungseinheit 7 unterworfen. Dabei wird vorteilhafterweise die Position der Gegenstandspunkte der Bilder, die mit einer reduzierten Bildsignalanzahl vorliegen, an die Position der Gegenstandspunkte des Intensitätsbildes, das mit hoher Auflösung vorliegt, angepaßt. Sobald eine Übereinstimmung der Lage oder eine gewünschte Lage-Relation der Bildpunkte, auf die dieselben Gegenstandspunkte abgebildet werden, auf den Sensorchips der einzelnen Kameras oder eine entsprechende Zuordnung der elektronisch gespeicherten Bildsignale, die von den selben Gegenstandspunkten stammen, erreicht wurde, wird eine Transformation, insbesondere eine Farbraumtransformation, in einer Transformationseinheit 8 vorgenommen. Um die reduzierten Bildsignale der weiteren Bilder mit den Bildsignalen des Intensitätsbildes verknüpfen zu können, werden die Bildsignale des Intensitätsbildes in einer Reduktionseinheit 6' ebenfalls reduziert und mit den reduzierten Bildsignalen der weiteren Bilder zu Farbcharakteristik-Bildern verknüpft; insbesondere erfolgt in der Transformationseinheit 8 eine Verknüpfung der reduzierten Bildsignale zu Bunttonbildern B und/oder Sättigungsbildern S.

Speicher zur Zwischenspeicherung der bezüglich Anzahl reduzierten Bildsignale der weiteren Bilder und Speicher in der Auswerteeinheit 5 zur Speicherung des Intenstitätsbildes I, des Bunttonbildes B und des Sättigungsbildes S sind nicht dargestellt.

Prinzipiell ist es möglich, die von den einzelnen Kameras 2,2',2" gleichzeitig erhaltenen Bildsignale vorerst zu speichern und mit derselben Reduktionseinheit 6 aufeinanderfolgend zu reduzieren und die reduzierten Bildsignale vor Durchführung der Transformation abzuspeichern.

Bei der Anordnung gemäß Fig. 2 ist eine Positionierungseinheit 7 nicht vorhanden, da es prinzipiell möglich ist, die Kameras 2,2' und 2" derart einzujustieren, daß die Sensorchips der einzelnen Kameras eindeutig auf den selben Bildausschnitt ausgerichtet sind; eine derartige Positionierung ist mechanisch möglich, jedoch aufwendig; vorzuziehen ist eine elektronische Positionierungseinheit 7.

Des weiteren sind für die Kameras 2,2' gemäß Fig. 2 keine Reduktionseinheiten 6 vorgesehen; diese beiden Kameras 2,2' weisen als Reduktionseinheit einen Sensorchip auf, der gegenüber dem Sensorchip der Kamera 2" eine reduzierte Anzahl von Bildpunkten besitzt. Damit liegt von vornherein eine Anzahl von Bildsignalen vor, die geringer ist als die Anzahl der Bildsignale des Intensitätsbildes. Durch eine entsprechende elektronische Zuordnung der Bildpunkte des Sensorchips der Kamera 2" und der Bildpunkte der Sensorchips der Kameras 2 und 2' können die Bildsignale, die von denselben Gegenstandspunkten stammen, korreliert ausgewertet bzw. verknüpft werden. Die Auswertung bzw. Verknüpfung der Bildsignale der Kameras 2,2' und 2" erfolgt in der Transformationseinheit 8 in der oben beschriebenen Weise.

Fig. 3 zeigt eine Anordnung, bei der Bilder des Gegenstandes 1 mit nur einer einzigen Kamera 2" aufgenommen werden. Die hintereinander aufgenommenen Bilder von demselben Gegenstandsbereich oder von überlappenden Gegenstandsbereichen werden zu Zeitpunkten aufgenommen, in denen sich Filter 3,3',3" unterschiedlicher Wellenlängen-bzw. spektraler Durchlässigkeit im Lichtweg befinden. Auf diese Weise werden Bilder des Gegenstandsbereiches in unterschiedlichen Wellenlängen- bzw. Spektralbereichen erhalten.

Prinzipiell könnte auch eine in Fig. 3 angedeutete Beleuchtungseinrichtung 9 vorgesehen sein, die den Gegenstand 1 durch sich vor der Beleuchtungseinrichtung 9 befindliche Filter 3,3',3" mit Licht unterschiedlicher Wellenlängenbereiche beleuchtet, sodaß auch auf diese Weise mit der Kamera 2" Bilder in unterschiedlichen Wellenlängen- bzw. Spektralbereichen hintereinander aufgenommen werden können.

Bei diesen Aufnahmetechniken ist es erforderlich, daß bei der Auswertung der von der Kamera 2" abgegebenen Bildsignale eine Zuordnung dieser Bildsignale zu den jeweiligen Wellenlängen- bzw. Spektralbereichen erfolgt; dazu ist eine Zuordnungseinheit bzw. eine Umschalteinheit 10 vorgesehen, welche die Bildsignale einer entsprechend korrekten Auswertung den Reduziereinheiten 6 bzw. 6' und der Transformationseinheit 8 zuführt.

Soferne ein Bild als Intensitätsbild in hoher Auflösung aufgenommen wird und ausgewertet werden soll bzw. an der Auswerteeinheit 5 als Intensitätsbild I zur Verfügung stehen soll, wird dieses Bild insbesondere als Schwarz-Weiß- bzw. Grauwert-Bild aufgenommen und es wird kein Filter im Lichtweg zwischen dem Gegenstand 1 und der Kamera 2" angeordnet bzw. eine Beleuchtung des Gegenstandes 1 wird mit weißem Licht vorgenommen.

Die Bildsignale der weiteren Bilder, die mit geringer bzw. reduzierter Auflösung zur Verfügung stehen sollen, werden über die Reduziereinheiten 6 geleitet und der Verknüpfungs- bzw. Transformationseinheit 8 zugeführt, in der nach einem vorgegebenen Algorithmus eine Verknüpfung mit den reduzierten Bildsignalen des Intensitätsbildes zu Buntton- und/oder Sättigungsbildern erfolgt.

Prinzipiell könnten die beiden Reduziereinheiten 6, die der Umschalteinheit 10 nachgeschaltet sind, entfallen und die Reduktion der Bildsignale in der Reduziereinheit 6' in der Verknüpfungseinheit 8 erfolgen. Es wäre lediglich Sorge dafür zu tragen, daß die von der Kamera 2" gelieferten Bildsignale je nach ihrer Zugehörigkeit zu einem Intensitätsbild oder zu einem mit einer bestimmten Wellenlänge bzw. in einem bestimmten Spektralbereich aufgenommenen weiteren Bild getrennt gespeichert und allenfalls nach gegenseitiger Zuordnung in einer Positionierungseinheit 7 entsprechend ihrer Zugehörigkeit zu ein und demselben Gegenstandspunkt verknüpft werden.

Eine elektronische Positionierungseinheit 7 ist Fall der Fig. 3 nicht erforderlich, wenn die Kamera 2" die Bilder von ein und demselben Gegenstandsbereich aufnehmen kann, d.h. wenn sich der Gegenstand 1 relativ zur Kamera 2" in Ruhe befindet.

Der Einsatz von elektronischen Positionierungseinrichtungen 7 ist von Vorteil, wenn die Bilder mit mehreren Kameras 2,2',2" aufgenommen werden und/oder wenn, wie es z.B. bei der Anordnung gemäß Fig. 3 der Fall sein könnte, sich der Gegenstand 1 während der Aufnahme der Bilder relativ zu der(n) aufnehmende(n) Kamera(s) bewegt; in diesen Fällen ist Sorge zu tragen, daß eine Auswertung maximal nur für denjenigen Gegenstandsbereich bzw. nur für denjenigen Bereich des Aufnahmefeldes erfolgt, der in jedem der zur Auswertung herangezogenen Bilder enthalten ist.

Der Vorteil von Filtern 3,3', die unmittelbar vor den Kameras 2,2' angeordnet werden, besteht in der leichten Auswechselbarkeit dieser Filter und darin, daß bei einem Auswechseln der Filter die Position der Kamera nicht verändert werden muß.

Eine Aufteilung der Lichtstrahlen ergibt den Vorteil, daß vor dem Objekt der Kamera handelsübliche Standardfilter, z.B. hochqualitative trennscharfe Interferenzfilter, austauschbar angeordnet werden können. Ein Wechsel der Filter ist über mechanische Filterwechsler möglich und es können Standardobjektive für die Kameras verwendet werden.

Das Problem, daß es bei hochauflösenden Sensorchips nicht einfach möglich ist, mehrere Kameras mechanisch so stabil und genau einzujustieren, daß alle Kameras punktgenau ihre Bilder zur Deckung bringen, wird durch die elektronische Positionierungseinheit 7 gelöst, sodaß auch relativ große Abstände der Kameras zueinander möglich werden, ohne die Auswertequalität wesentlich zu beeinträchtigen.

Durch die Reduktion der Bildsignale erfolgt eine Verminderung des erforderlichen Speicher- und Verarbeitungsaufwandes und insbesondere des Rechenaufwandes bei der Transformation.

Prinzipiell ist auch eine Positionskalibrierung möglich, um Bruchteile von Pixelpositionen auszugleichen und zwar durch eine Bildtransformation und Interpolation im Sub-Pixel-Bereich.

Da zur Ermittlung von Farbcharakteristik-Bildern, d.h., der Buntton- und Sättigungsbilder, auch die Bildsignale des Intensitätsbildes einbezogen werden müssen, werden für die Transformation auch die Bildsignale des Intensitätsbildes reduziert und die reduzierten, d.h. die elektronisch reduzierten oder die bei Verwendung von niedriger auflösenden Sensorchips in geringerer Anzahl anfallenden, Bildsignale der aufgenommenen Bilder in der Transformationeinheit 8 miteinander verknüpft.

Die erfindungsgemäße Vorgangsweise eignet sich auch für TDI-Kameras, auch wenn diese Kameras mit unterschiedlichen Taktraten betrieben werden. Prinzipiell wäre es notwendig, daß alle TDI-Kameras mit dem selben Abbildungsmaßstab und mit der selben Taktrate arbeiten; durch die elektronische Positionierungseinheit 8 kann dies jedoch ausgeglichen werden und es ist nur darauf zu achten, daß die drei TDI-Kameras auf dasselbe Aufnahmefeld ausgerichtet sind.

Üblicherweise werden Bilder des Gegenstandes 1 mit drei Kameras aufgenommen; prinzipiell ist die erfindungsgemäße Vorgangsweise auch mit nur zwei oder mit mehr als drei Kameras, die Bildern unterschiedlicher Wellenlänge bzw. unterschiedlicher Spektralbereiche aufnehmen, realisierbar. Für bestimmte Anwendungszwecke ist es möglich, ein Schwarz-Weiß- bzw. Grauwert-Bild, insbesondere als Intensitätsbild mit hoher Auflösung, aufzunehmen und zusätzlich nur ein Farbbild, z.B. ein Ultraviolett- oder Infrarotbild, aufzunehmen, da man aus Erfahrung weiß, daß Abweichungen in der Farbe bereits in geringerer Auflösung wahrgenommen werden können als Abweichungen in der Helligkeit (Intensität). Üblicherweise werden Grauwert- bzw. Schwarz-Weißbilder und zusätzlich Rot-Grün und/oder Blaubilder aufgenommen.

Die erfindungsgemäße Vorgangsweise eignet sich insbesondere zur Qualitätskontrolle von Druckwerken, z.B. Wertpapieren, Banknoten, Checks, Checkkarten, Stempel- und Briefmarken bzw. von Verpackungsmaterial, z.B. Zigarettenschachteln, Dosendeckel usw.

Wenn in einem Bild eine bestimmte Farbe vorherrscht, wie es z.B. bei Banknoten zumeist der Fall ist, kann es ausreichen, anstelle der sonst üblichen drei Grundfarbbilder mit nur zwei Bildern zu arbeiten, wovon nur eines, d.h., das Intensitätsbild hochauflösend ist; das zweite Bild ist ein Farbbild eines bestimmten Wellenlängen- bzw. spektralen Bereiches, wobei dieses Bild niedrig auflösend abgebildet wird. Es reicht aus, z.B. Banknoten in Hinblick auf die Farbe niedrig auflösend zu überprüfen; im hochauflösenden Intensitätsbild kann eine feine Linienstruktur geprüft und es können hochgenau Vermessungsaufgaben durchgeführt werden. Das hochauflösende Bild umfaßt vorteilhafterweise das gesamte Farbspektrum, d.h. es ist ein Grauwertbild; es könnte jedoch auch vorgesehen sein, daß das hochauflösende Bild in Abhängigkeit von einem speziellen Anwendungsfall zur Kontrasterhöhung ebenfalls ein bestimmtes selektives Farbspektrum erfaßt.

Ein weiterer Einsatzzweck der Erfindung kann die Identifikation, Klassifikation und Vermessung von Objekten, z.B. in Luftbildaufnahmen, oder eine Analyse von medizinischen Präparaten sein. Soferne von derartigen Gegenständen bzw. Objekten Multispektralaufnahmen, d.h. Aufnahmen in zwei oder mehr Spektralbereichen vorgenommen werden, ist für unterschiedliche Zwecke zumeist auch eine unterschiedliche Bildauflösung erforderlich. Für eine Klassifikation von Objekten bei Luftbildaufnahmen, z.B. bei verschiedenen Arten von Bodenbepflanzungen, sind Bilder verschiedener Wellenlänge bzw. in verschiedenen Spektralbereichen, allenfalls auch im Infrarot, erforderlich. Dagegen erfordert die Bestimmung von Grenzen oder die Vermessung von Positionen von markanten Punkten ein hochauflösendes Bild, z.B. ein Grauwertbild oder unter Umständen auch ein bestimmtes farbselektives Bild.

Ähnliche Gegebenheiten liegen auch bei der Erkennung, Klassifikation und Vermessung von Zellstrukturen in Mikroskopieaufnahmen vor.

Bei der Übertragung, Speicherung und Archivierung von Bilddaten werden Kosten vor allem durch das Datenvolumen verursacht. Es ist dazu festzustellen, daß eine Reduktion der Auflösung der Farbinformation bei Bildern bestimmter spektraler Bereiche und Wellenlängenbereiche vom Menschen fast nicht wahrgenommen wird, weshalb die Farbcharakteristik-Bilder bei der erfindungsgemäßen Vorgangsweise bezüglich ihrer Auflösung reduziert werden, ohne daß damit eine Beeinträchtigung bei der Auswertung eintritt, insbesondere auch deshalb, weil hinsichtlich der Auswertung eines Intensitätsbildes und eines Farbwertcharakteristikbildes unterschiedliche Anforderungen an die Bilder gestellt werden.

Es kann ein und dieselbe Reduziereinheit für alle hintereinander aufgenommenen Bilder vorgesehen sein und die reduzierten Bildsignale werden vor ihrer Verknüpfung zwischen- bzw. abgespeichert. Auch die reduzierten Bildsignale des Intensitätsbildes, das vorteilhafterweise nach den weiteren Bildern aufgenommen wird, kann zwischengespeichert werden.

Prinzipiell ist es auch möglich, nur zwei Kameras einzusetzen, wobei mit einer Kamera das lntensitätsbild aufgenommen wird und mit der anderen Kamera mit einer reduzierten Chipfläche eine reduzierte Anzahl von Bildsignalen aufgenommen wird, wobei dieser weiteren Kamera entweder unterschiedliche Farbfilter vorgesetzt werden oder für die Aufnahme mit dieser zweiten Kamera der Gegenstand mit der Beleuchtungseinrichtung unterschiedlich beleuchtet wird.

Gespeichert werden vorteilhafterweise die zuerst aufgenommenen weiteren Bilder, die mit dem später aufgenommenen lntensitätsbild verknüpft werden.

Zur Aufnahme der Bilder des Gegenstandes mit zumindest einer Kamera in unterschiedlichen Wellenlängen- bzw. Spektralbereichen ist es anstelle, den Gegenstand direkt mit der Kamera aufzunehmen auch möglich, daß zur Bildübertragung und Lichtwegaufteilung zwischen dem Gegenstand 1 und den eingesetzten Kameras 2, 2', 2" Lichtleiter eingesetzt sind, die von ein und demselben Bereich des Gegenstandes 1 Bilder aufnehmen und zu den eingesetzten Kameras 2, 2', 2" leiten, wobei zwischen dem kameraseitigen Ende zumindest eines der Lichtleiter und dem Objektiv der zugehörigen Kamera zumindest ein, gegebenenfalls austauschbarer, für einen vorgegebenen Wellenlängen- bzw. Spektralbereich durchlässiger Farbfilter 3, 3' angeordnet ist.

## Patentansprüche

1. Verfahren zur Aufnahme und Auswertung von Bildern eines Gegenstandes, wobei die Bilder von einander zumindest überdeckenden Bereichen des Gegenstandes, vorzugsweise von jeweils dem selben Bereich des Gegenstandes, mit zumindest einer Grauwert-Kamera aufgenommen und vorzugsweise nach Durchführung einer Farbraumtransformation zur Auswertung zur Verfügung gestellt werden, **dadurch gekennzeichnet,**
- **daß** die Bilder in unterschiedlichen Wellenlängen- oder Spektralbereichen aufgenommen werden,
- **daß** zumindest ein Bild mit hoher Auflösung aufgenommen wird und die von diesem Bild abgeleiteten Bildsignale zur Auswertung als Intensitätsbild hoher Auflösung zur Verfügung gestellt werden,
- **daß** zumindest ein weiteres Bild mit geringerer Auflösung aufgenommen wird oder die Bildsignale zumindest eines weiteren Bildes einer Reduktion unterzogen werden,
- **daß** die Bildsignale des Intensitätsbildes ebenfalls in reduziertem Umfang zur Verfügung gestellt werden,
- **daß** die reduzierten Bildsignale des Intensitätsbildes und die reduzierten Bildsignale oder die Bildsignale mit geringerer Auflösung des zumindest einen weiteren Bildes durch eine Transformation, vorzugsweise eine Farbraumtransformation, verknüpft und zu zumindest einem Farbcharakteristikbild, vorzugsweise Buntton- und/oder Sättigungsbild, niederiger Auflösung transformiert bzw. zusammengesetzt werden, und
- **daß** das zumindest eine Farbcharakteristik-Bild zusätzlich zum Intensitätsbild zur Weiterverarbeitung, Auswertung und/oder Speicherung, zur Verfügung gestellt wird.

2. Verfahren nach Anspruch 1, **dadurch gekennzeichnet, daß** die einzelnen Bilder des Gegenstandes, vorzugsweise hintereinander oder aufeinander folgend, mit derselben Grauwert-Kamera aufgenommen werden, oder daß vom Gegenstand Bilder mit zumindest zwei, vorzugsweise drei, Grauwert-Kameras aufgenommen werden, wobei mit jeder der Grauwert-Kameras, vorzugsweise gleichzeitig, ein Bild des Gegenstandes in einem verschiedenen Wellenlängen- bzw. Spektralbereich aufgenommen wird.

3. Verfahren nach Anspruch 1 oder 2, **dadurch gekennzeichnet, daß** für die einzelnen Aufnahmen das vom Gegenstand ausgehende Licht jeweils bezüglich Wellenlänge und/oder Spektralbereich unterschiedlich gefiltert wird oder daß der Gegenstand für die einzelnen Aufnahmen jeweils mit Licht unterschiedlicher Wellenlänge oder Spektralbereiche beleuchtet wird.

4. Verfahren nach Anspruch 2, **dadurch gekennzeichnet, daß** zur Aufnahme von Bildern in verschiedenen Wellenlängen- bzw. Spektralbereichen die vom Gegenstand abgehenden Lichtstrahlen in Lichtwege aufgeteilt werden und in allen Lichtwegen oder in allen bis auf einen der Lichtwege eine Filterung vorgenommen wird, wobei die Filterung in den einzelnen Lichtwegen unterschiedlich erfolgt, und daß am Ende jedes Lichtweges eine Kamera angeordnet wird, mit der die Bilder in unterschiedlichen Wellen- bzw. Spektralbereichen aufgenommen werden, wobei gegebenenfalls die Filterung nach der Aufteilung der Lichtstrahlen in die einzelnen Lichtwege und vor dem Eintreffen der Lichtstrahlen im Objektiv der jeweiligen Kamera vorgenommen wird.

5. Verfahren nach einem der Ansprüche 1 bis 4, **dadurch gekennzeichnet, daß** die reduzierten Bildsignale zumindest der weiteren Bilder zwischengespeichert werden und/oder daß die reduzierten Bildsignale der weiteren Bilder mit den reduzierten Bildsignalen des nach den weiteren Bildern aufgenommenen Intensitätsbildes verknüpft werden.

6. Verfahren nach einem der Ansprüche 1 bis 5, **dadurch gekennzeichnet, daß** die Bildsignale der weiteren Bilder reduziert werden, indem die von zumindest zwei, vorzugsweise nebeneinanderliegenden, Bildpunkten des Sensorchips erhaltenen Bildsignale gemittelt werden oder nur Bildsignale von einer reduzierten Anzahl von Bildpunkten des Sensorchips abgeleitet werden und/oder daß zur Aufnahme von weiteren Bildern mit reduzierter Anzahl von Bildsignalen Kameras mit Sensorchips eingesetzt werden, die im Vergleich mit dem Sensorchip der Kamera, mit der das Intensitätsbild mit hoher Auflösung aufgenommen wird, einen Sensorchip aufweisen, der eine geringere Anzahl von Bildpunkten, vorzugsweise ein Viertel der Bildpunkte, aufweist.

7. Verfahren nach einem der Ansprüche 1 bis 6, **dadurch gekennzeichnet, daß** bei der Reduktion die Bildsignale bzw. die Bildpunkte auf etwa 25 % gegenüber den für die Aufnahme des Intensitätsbildes zur Verfügung stehenden bzw. auswertbaren Bildsignalen bzw. Bildpunkten reduziert werden.

8. Verfahren nach einem der Ansprüche 1 bis 7, **dadurch gekennzeichnet, daß** die Bildsignale der weiteren Bilder und die Bildsignale des Intensitätsbildes nach demselben vorgegebenen Algorithmus reduziert werden und/oder daß für das Intensitätsbild ein das gesamte Farbspektrum erfassendes Schwarz-Weißbild oder Grauwertbild aufgenommen und in hoher Auflösung zur Verfügung gestellt wird.

9. Verfahren nach einem der Ansprüche 1 bis 8, **dadurch gekennzeichnet, daß** die reduzierten Bildsignale der weiteren Bilder und des Intensitätsbildes zur Gewinnung der Farbcharakteristik-Bilder durch Quotienten- oder Differenzbildung, insbesondere Bildung einer gewichteten Differenz, verknüpft werden.

10. Verfahren nach einem der Ansprüche 1 bis 9, **dadurch gekennzeichnet,**
- **daß** die Kameras und/oder die Sensorchips der Kameras in bezug auf den Gegenstand mechanisch derart einjustiert werden, daß gleichen Gegenstandspunkten gleiche Bildpunkte auf den Sensorchips der einzelnen Kameras zugeordnet sind und/oder
- **daß** die auf die Sensorchips der einzelnen Kameras abgebildeten Gegenstandspunkte lagemäßig einander zugeordnet werden, indem denselben Gegenstandspunkten einander entsprechende oder die gleichen Bildpunkte auf den einzelnen Sensorchips zugeordnet werden und/oder
- **daß** bei einer Abbildung derselben Gegenstandspunkte auf unterschiedlich auf den Sensorchips der einzelnen Kameras positionierte Bildpunkte eine Zuordnung der Gegenstandspunkte und der von denselben Gegenstandspunkten stammenden Bildpunktsignale mit einer elektronisch- geometrischen Positionstransformation erfolgt, und/oder
- **daß** die Position der abgebildeten Gegenstandspunkte der weiteren, mit reduzierten Bildsignalen zur Verfügung stehenden Bilder elektronisch an die Position der zur Aufnahme des lntensitätsbildes abgebildeten Gegenstandspunkte angepaßt wird und/oder
- **daß** die elektronische Positionstransformation der Gegenstandspunkte bzw. der Bildsignale der weiteren Bilder nach der Reduktion der Bildsignale oder mit Bildsignalen geringerer Auflösung erfolgt, wobei gegebenenfalls im Fall von in bezug auf die Bildpunkte nicht ganzzahligen Positionstransformationen eine elektronische Interpolation im Sub-Pixel-Bereich erfolgt.

11. Anordnung zur Aufnahme und Auswertung von Bildern eines Gegenstandes, wobei zur Aufnahme von Bildern von einander zumindest überdeckenden Bereichen des Gegenstandes, vorzugsweise von jeweils demselben Bereich des Gegenstandes, zumindest eine Grauwert-Kamera vorgesehen ist, die an eine Auswerteeinheit angeschlossen ist, insbesondere zur Durchführung des Verfahrens nach einem der Ansprüche 1 bis 10, **dadurch gekennzeichnet,**
- **daß** mit der zumindest einen Kamera (2, 2', 2") Bilder des Gegenstandes (1) in unterschiedlichen Wellenlängen- bzw. Spektralbereichen aufnehmbar sind,
- **daß** zur Erstellung eines Intensitätsbildes die Bildsignale eines mit hoher Auflösung aufgenommenen Bildes, vorzugsweise eines das gesamte Farbspektrum erfassenden Bildes oder eines Schwarz-Weißbildes oder eines Grauwertbildes, der Auswerteeinrichtung (5) zugeführt sind,
- **daß** die Bildsignale zumindest eines weiteren, mit gegenüber dem Intensitätsbild mit einer geringeren Auflösung aufgenommenen Bildes des Gegenstandes oder die in einer Reduktionseinheit (6) reduzierten Bildsignale zumindest eines weiteren Bildes einer Verknüpfungs- und Transformationseinheit (8) zugeführt sind,
- **daß** die Bildsignale des Intensitätsbildes über eine Reduktionseinheit (6') der Verknüpfungs- und Transformationseinheit (8) zugeführt sind, in der die reduzierten Bildsignale des Intensitätsbildes und des zumindest einen weiteren Bildes im Zuge einer Transformation, vorzugsweise einer Farbraumtransformation, verknüpfbar und zu zumindest einem Farbcharakteristik-Bild, vorzugsweise Bunttonoder Sättigungsbild, niedriger Auflösung transformierbar bzw. zusammensetzbar sind
- und **daß** in der an die Verknüpfungs- und Transformationseinheit (8) angeschlossenen Auswerteeinheit (5) das Intensitätsbild in hoher Auflösung und zumindest ein Farbcharakteristikbild in geringer Auflösung zur weiteren Verwendung, insbesondere gespeichert, vorliegen.

12. Anordnung nach Anspruch 11, **dadurch gekennzeichnet, daß** zur Aufnahme der Bilder des Gegenstandes (1) zumindest zwei, vorzugsweise drei Grauwert-Kameras (2, 2', 2") vorgesehen sind, wobei mit jeder der Kameras (2, 2', 2"), vorzugsweise gleichzeitig, ein Bild des Gegenstandes (1) in einem anderen Wellenlängen- bzw. Spektralbereich aufnehmbar ist.

13. Anordnung nach Anspruch 11 oder 12, **dadurch gekennzeichnet,**
- **daß** zwischen dem Gegenstand (1) und dem Objektiv zumindest einer Kamera (2, 2', 2"), vorzugsweise unmittelbar vor dem Objektiv, zumindest ein, vorzugsweise austauschbarer, Farbfilter (3, 3') angeordnet ist und/oder
- **daß** insbesondere zur Aufnahme von Bildern des Gegenstandes (1) unter etwa dem selben Winkel im Lichtweg der vom Gegenstand (1) abgehenden Lichtstrahlen zumindest ein Strahlenteiler (4) vorgesehen ist, z.B. ein halbdurchlässiger Spiegel, mit dem die vom Gegenstand abgehenden Lichtstrahlen auf die einzelnen Kameras (2, 2') aufgeteilt sind.

14. Anordnung nach Anspruch 11, **dadurch gekennzeichnet, daß** für die Aufnahme von Bildern mit einer einzigen Kamera (2") in den Lichtweg zwischen dem Gegenstand (1) und der Kamera (2") zumindest ein Filter, vorzugsweise eine Anzahl von für Licht unterschiedlicher Wellenlänge bzw. spektraler Zusammensetzung durchlässigen, Filtern (3, 3', 3") einschaltbar ist, wobei gegebenenfalls der (die) Filter (3, 3', 3") in einem Träger auswechselbar gehalten und mit diesem in den Lichtweg einschwenkbar ist (sind) oder eine Beleuchtungseinrichtung (9) vorgesehen ist, mit der der Gegenstand (1) für die Aufnahme einzelner Bilder jeweils mit Licht unterschiedlicher Wellenlängen bzw. Spektralbereiche beleuchtbar ist, wobei gegebenenfalls der einzigen Kamera (2") eine Umschalteinrichtung (10) nachgeschaltet ist, mit der die Bildsignale eines aufgenommenen Bildes der Auswerteeinheit (5) und/oder einer Reduktionseinheit (6) zuführbar sind.

15. Anordnung nach einem der Ansprüche 11 bis 13, **dadurch gekennzeichnet,**
- **daß** zumindest eine Kamera (2, 2') einen Sensorchip aufweist, der gegenüber der Bildpunktanzahl des Sensorchips der für die Aufnahme des Intensitätsbildes vorgesehenen Kamera (2") eine verringerte Anzahl von Bildpunkten besitzt und/oder
- **daß** an den Sensorchip der für die Aufnahme der weiteren Bilder vorgesehenen Kamera (2,2') eine Reduktionseinheit (6, 6') für die Bildsignale angeschlossen ist, deren Ausgang mit der Verknüpfungs- bzw. Transformationseinheit (8) verbunden ist.

16. Anordnung nach einem der Ansprüche 11 bis 15, **dadurch gekennzeichnet, daß** den Sensorchips der Kameras (2, 2', 2") oder den einzelnen Reduktionseinheiten (6,6') eine elektronische Positionierungseinheit (7) nachgeschaltet ist, mit der mittels einer elektronisch-geometrischen Bildtransformation die mit den einzelnen Kameras (2, 2', 2") aufgenommenen Bilder bzw. die auf dem Sensorchip abgebildeten Gegenstandspunkte zur Deckung oder in eine vorgegebene gegenseitige Position gebracht werden bzw. mit der bei einer Abbildung derselben Gegenstandspunkte auf unterschiedliche Bildpunkte der Sensorchips der einzelnen Kameras (2, 2', 2") eine Zuordnung einander entsprechender Gegenstandspunkte und Bildpunkte im Zuge einer elektronisch-geometrischen Positionstransformation erfolgt.

17. Anordnung nach einem der Ansprüche 11 bis 16, **dadurch gekennzeichnet, daß** zur Bildübertragung und Lichtwegaufteilung zwischen dem Gegenstand (1) und den eingesetzten Kameras (2, 2', 2") Lichtleiter eingesetzt sind, die von ein und demselben Bereich des Gegenstandes (1) Bilder aufnehmen und zu den eingesetzten Kameras (2,2',2") leiten, wobei zwischen dem kameraseitigen Ende zumindest eines der Lichtleiter und dem Objektiv der zugehörigen Kamera zumindest ein, gegebenenfalls austauschbarer, für einen vorgegebenen Wellenlängen- bzw. Spektralbereich durchlässiger Farbfilter (3, 3') angeordnet ist.

## Claims

1. A method of recording and evaluating images of an object, wherein the images of at least mutually overlapping regions of the object, preferably of the same region of the object in each case, are recorded by at least one grey-scale camera and are preferably made available after carrying out a colour-space transformation for evaluation, **characterized in that**
- the images are recorded in different wavelength or spectral ranges,
- at least one image is recorded with high resolution and the image signals derived from this image are made available for evaluation as an intensity image of high resolution,
- at least one further image is recorded with lower resolution or the image signals of at least one further image undergo a reduction,
- the image signals of the intensity image are likewise made available in a reduced size,
- the reduced image signals of the intensity image and the reduced image signals or the image signals of lower resolution of the at least one further image are linked by a transformation, preferably a colour-space transformation, and are transformed or combined to form at least one colour-characteristic image, preferably a colour-tone and/or saturation image of low resolution, and
- the at least one colour-characteristic image is additionally made available to the intensity image for further processing, evaluation and/or storage.

2. A method according to Claim 1, **characterized in that** the individual images of the object are recorded by the same grey-scale camera, preferably one after the other or in succession, or images of the object are recorded by at least two, and preferably three, grey-scale cameras, wherein an image of the object is recorded by each of the grey-scale cameras, preferably simultaneously, in a different wavelength or spectral range.

3. A method according to Claim 1 or 2, **characterized in that** for the individual recordings the light travelling from the object is filtered differently with respect to the wavelength and/or spectral range in each case, or the object is illuminated for the individual recordings with light of different wavelength or spectral ranges in each case.

4. A method according to Claim 2, **characterized in that** in order to record images in different wavelength or spectral ranges the light beams travelling from the object are split into light paths and filtering takes place in all the light paths or in all but one of the light paths, wherein the filtering takes place differently in the individual light paths, and a camera, by which the images are recorded in different wavelength or spectral ranges, is arranged at the end of each light path, wherein the filtering optionally takes place after the splitting of the light beams into the individual light paths and before the arrival of the light beams in the objective lens of the respective camera.

5. A method according to one of Claims 1 to 4, **characterized in that** the reduced image signals at least of the further images are temporarily stored and/or the reduced image signals of the further images are linked to the reduced image signals of the intensity image recorded after the further images.

6. A method according to one of Claims 1 to 5, **characterized in that** the image signals of the further images are reduced **in that** the image signals obtained from at least two, preferably adjacent, image points of the sensor chip are averaged or only image signals are derived from a reduced number of image points of the sensor chip, and/or, in order to record further images with a reduced number of image signals, use is made of cameras with sensor chips, which - as compared with the sensor chip of the camera by which the intensity image with high resolution is recorded - have a sensor chip which has a smaller number of image points, preferably a quarter of the image points.

7. A method according to one of Claims 1 to 6, **characterized in that** during the reduction the image signals or the image points are reduced to approximately 25% with respect to the image signals or image points which are available for the recording of the intensity image and which can be evaluated.

8. A method according to one of Claims 1 to 7, **characterized in that** the image signals of the further images and the image signals of the intensity image are reduced in accordance with the same pre-determined algorithm, and/or a black-and-white image or grey-scale image covering the entire colour spectrum is recorded for the intensity image and is made available in a high resolution.

9. A method according to one of Claims 1 to 8, **characterized in that** the reduced image signals of the further images and of the intensity image are linked in order to obtain the colour-characteristic images by quotient or difference formation, in particular the formation of a weighted difference.

10. A method according to one of Claims 1 to 9, **characterized in that**
- the cameras and/or the sensor chips of the cameras are adjusted mechanically with respect to the object in such a way that the same image points on the sensor chips of the individual cameras are associated with the same points of the object, and/or
- the points of the object imaged onto the sensor chips of the individual cameras are associated with one another with respect to their position, **in that** mutually corresponding image points or the same image points on the individual sensor chips are associated with the same points of the object, and/or
- when the same points of the object are imaged onto image points positioned differently on the sensor chips of the individual cameras a correlation of the points of the object and of the image-point signals originating in the same points of the object takes place with an electronic-geometrical position transformation, and/or
- the position of the imaged points of the object of the further images available with reduced image signals is adapted electronically to the position of the points of the object imaged in order to receive the intensity image, and/or
- the electronic position transformation of the points of the object or of the image signals of the further images takes place after the reduction of the image signals or with image signals of lower resolution, wherein an electronic interpolation in the subpixel range optionally takes place in the case of position transformations not constituting whole numbers with respect to the image points.

11. A device for recording and evaluating images of an object, wherein at least one grey-scale camera which is attached to an evaluation unit is provided in order to record images of at least mutually overlapping regions of the object, preferably of the same region of the object in each case, in particular in order to perform the method according to one of Claims 1 to 10, **characterized in that**
- images of the object (1) can be recorded in different wavelength or spectral ranges with the at least one camera (2, 2', 2"),
- the image signals of an image recorded at high resolution, in particular an image covering the entire colour spectrum or a black-and-white image or a grey-scale image, are supplied to the evaluation unit (5) in order to produce an intensity image,
- the image signals of at least one further image of the objected recorded with a lower resolution than the intensity image or the image signals - reduced in a reduction unit (6) - of at least one further image are supplied to a linking and transformation unit (8),
- the image signals of the intensity image are supplied by way of a reduction unit (6') to the linking and transformation unit (8) in which the reduced image signals of the intensity image and of the at least one further image can be linked in the course of a transformation, preferably a colour-space transformation, and can be transformed or combined to form at least one colour-characteristic image, preferably a colour-tone or saturation image of low resolution,
- and the intensity image in a high resolution and at least one colour-characteristic image in a low resolution are present for further use, and in particular stored, in the evaluation unit (5) attached to the linking and transformation unit (8).

12. A device according to Claim 11, **characterized in that** at least two, and preferably three grey-scale cameras (2, 2', 2") are provided for recording the images of the object (1), wherein one image of the object (1) can be recorded by each of the cameras (2, 2', 2"), preferably simultaneously, in another wavelength or spectral range.

13. A device according to Claim 11 or 12, **characterized in that**
- at least one colour filter (3, 3'), which is preferably interchangeable, is arranged between the object (1) and the objective lens of at least one camera (2, 2', 2"), preferably immediately in front of the objective lens, and/or
- at least one beam splitter (4), for example a semi-transparent mirror, by which the light beams travelling from the object are split to the individual cameras (2, 2', 2"), is provided in particular for recording images of the object (1) at approximately the same angle in the light path of the light beams travelling from the object (1).

14. A device according to Claim 11, **characterized in that** in order to record images with a single camera (2") at least one filter, and preferably a plurality of filters (3, 3', 3") permeable by light of different wavelength or spectral composition can be inserted into the light path between the object (1) and the camera (2"), wherein the filter or filters (3, 3', 3") is or are optionally held in an interchangeable manner in a support and is or are pivotable by the latter into the light path or an illumination device (9) is provided by which the object (1) can be illuminated in order to record individual images with light of different wavelength or spectral ranges in each case, wherein a deflecting device (10), by which the image signals of a recorded image can be supplied to the evaluation unit (5) and/or a reduction unit (6), is optionally arranged downstream of the single camera (2").

15. A device according to one of Claims 11 to 13, **characterized in that**
- at least one camera (2, 2') has a sensor chip which has a reduced number of image points as compared with the number of image points of the sensor chip of the camera (2") provided for recording the intensity image, and/or
- a reduction unit (6, 6') for the image signals, the exit of which is connected to the linking and transformation unit (8), is attached to the sensor chip of the camera (2, 2') provided for recording the further images.

16. A device according to one of Claims 11 to 15, **characterized in that** an electronic positioning unit (7), by which the images recorded with the individual cameras (2, 2', 2") or the points of the object imaged on the sensor chip are brought into alignment or into a pre-determined mutual position by means of an electronic-geometrical image transformation or by which a correlation of mutually corresponding points of the object and image points takes place in the course of an electronic-geometrical position transformation in the case of an imaging of the same points of the object at different image points of the sensor chip of the individual cameras (2, 2', 2").

17. A device according to one of Claims 11 to 16, **characterized in that** light guides, which record images from one and the same region of the object (1) and convey them to the cameras (2, 2', 2") used, are used for transmitting the images and splitting the light paths between the object (1) and the cameras (2, 2', 2") used, wherein at least one colour filter (3, 3'), which is optionally interchangeable and is permeable by a pre-determined wavelength or spectral range is arranged between the end of at least one of the light guides towards the camera and the objective lens of the associated camera.

## Revendications

1. Procédé pour l'enregistrement et l'exploitation d'images d'un objet, dans lequel les images au moins de zones de l'objet se chevauchant, ou de préférence d'une même zone de l'objet, sont enregistrées avec au moins une caméra à niveaux de gris et mises à disposition en vue de leur exploitation de préférence après qu'une transformation de l'espace chromatique a été effectuée, **caractérisé en ce que** :
- les images sont enregistrées à des longueur d'ondes ou dans des domaines spectraux différents,
- au moins une image est enregistrée avec une résolution élevée et les signaux d'image dérivés de cette image sont mis à disposition en vue de leur exploitation sous la forme d'une image d'intensité à haute résolution,
- au moins une autre image est enregistrée avec une résolution moindre ou bien les signaux d'image d'au moins une autre image sont soumis à une réduction,
- les signaux d'image de l'image d'intensité sont mis à disposition également avec une étendue réduite,
- les signaux d'image réduits de l'image d'intensité et les signaux d'image réduits ou les signaux d'images à résolution moindre de la ou lesdites autres images sont chaînés par une transformation, de préférence une transformation de l'espace chromatique, et transformés ou assemblés en au moins une image de caractéristique chromatique, de préférence une image de chrominance et/ou une image de saturation, de plus faible résolution, et
- la ou lesdites images de caractéristique chromatique sont mises à disposition en plus de l'image d'intensité en vue de son retraitement, de son exploitation et/ou de son stockage.

2. Procédé selon la revendication 1, **caractérisé en ce que** les différentes images de l'objet, de préférence se suivant l'une derrière l'autre ou l'une après l'autre, sont enregistrées avec la même caméra à niveaux de gris, ou bien **en ce que** des images de l'objet sont enregistrées avec au moins deux, de préférence trois, caméras à niveaux de gris, une image de l'objet étant enregistrée avec chacune des caméras à niveaux de gris, de préférence en même temps, à une longueur d'onde ou dans un domaine spectral différent.

3. Procédé selon la revendication 1 ou la revendication 2, **caractérisé en ce que**, pour les différents enregistrements, la lumière venant de l'objet est filtrée différemment en ce qui concerne sa longueur d'onde et/ou son domaine spectral, ou bien **en ce que**, pour les différents enregistrements, l'objet est éclairé respectivement avec de la lumière de longueur d'onde ou de domaine spectral différent.

4. Procédé selon la revendication 2, **caractérisé en ce que**, pour l'enregistrement d'images à des longueurs d'onde ou dans des domaines spectraux différents, les faisceaux lumineux venant de l'objet sont divisés en chemins optiques et, dans tous les chemins optiques ou dans tous sauf un, on effectue un filtrage, ledit filtrage étant différent dans chaque chemin optique, et **en ce que** l'on dispose à l'extrémité de chaque chemin optique une caméra au moyen de laquelle les images sont enregistrées à des longueurs d'onde ou dans des domaines spectraux différents, le filtrage étant, le cas échéant, effectué après la division des faisceaux lumineux en différents chemins optiques et avant que les faisceaux lumineux viennent frapper l'objectif de la caméra concernée.

5. Procédé selon l'une des revendications 1 à 4, **caractérisé en ce que** les signaux d'image réduits, au moins ceux des autres images, font l'objet d'un stockage intermédiaire et/ou **en ce que** les signaux d'image réduits des autres images sont chaînés avec les signaux d'image réduits de l'image d'intensité enregistrée après les autres images.

6. Procédé selon l'une des revendications 1 à 5, **caractérisé en ce que** les signaux d'image des autres images sont réduits en effectuant un moyennage des signaux d'image obtenus à partir d'au moins deux points d'image de préférence adjacents de la puce de capteur, ou bien **en ce que** seuls des signaux d'image d'un nombre réduit de points d'image de la puce de capteur sont dérivés et/ou **en ce que**, pour l'enregistrement d'autres images avec un nombre réduit de signaux d'image, on utilise des caméras avec des puces de capteurs qui, comparées à la puce de capteur de la caméra avec laquelle l'image d'intensité à haute résolution a été enregistrée, possèdent une puce de capteur qui présente un plus petit nombre de points d'image, de préférence un quart des points d'image.

7. Procédé selon l'une des revendications 1 à 6, **caractérisé en ce que**, lors de la réduction, les signaux d'image ou les points d'image sont réduits à environ 25% par rapport aux signaux d'image ou points d'image disponibles ou exploitables pour l'enregistrement de l'image d'intensité.

8. Procédé selon l'une des revendications 1 à 7, **caractérisé en ce que** les signaux d'image des autres images et les signaux d'image de l'image d'intensité sont réduits suivant le même algorithme prédéfini et/ou **en ce que**, pour l'image d'intensité, une image en noir et blanc ou une image en niveaux de gris englobant la totalité du spectre chromatique est enregistrée et mise à disposition avec une haute définition.

9. Procédé selon l'une des revendications 1 à 8, **caractérisé en ce que** les signaux d'image réduits des autres images et de l'image d'intensité sont chaînés pour obtenir les images de caractéristique chromatique par formation de quotient ou de différence, en particulier par formation d'une différence pondérée.

10. Procédé selon l'une des revendications 1 à 9, **caractérisé en ce que** :
- les caméras et/ou les puces de capteurs des caméras sont ajustées mécaniquement par rapport à l'objet de façon que des points identiques de l'objet soient affectés aux mêmes points d'image sur les puces de capteurs des différentes caméras, et/ou
- les points de l'objet formés sur les puces de capteurs des différentes caméras sont affectés les uns aux autres en fonction de la position en affectant aux mêmes points de l'objet des points d'image mutuellement correspondants ou identiques sur les différentes puces de capteurs, et/ou
- lors d'une reproduction des mêmes points de l'objet sur des points d'image positionnés de manière différente sur les puces de capteurs des différentes caméras, une affectation des points de l'objet et des signaux de points d'image issus des mêmes points de l'objet est effectuée avec une transformation de position géométrique électronique, et/ou
- la position des points de l'objet reproduits des autres images disponibles avec des signaux d'image réduits est adaptée électroniquement à la position des points de l'objet reproduits pour enregistrer l'image d'intensité, et/ou
- la transformation de position électronique des points de l'objet ou des signaux d'image des autres images se fait après réduction des signaux d'image ou bien avec des signaux d'image de résolution moindre, une interpolation électronique au niveau du sous-pixel étant le cas échéant effectuée dans le cas de transformations de position qui ne représentent pas des nombres entiers par rapport aux points d'image.

11. Dispositif pour l'enregistrement et l'exploitation d'images d'un objet, dans lequel, pour enregistrer les images au moins de zones de l'objet se chevauchant ou de préférence d'une même zone de l'objet, il est prévu au moins une caméra à niveaux de gris qui est reliée à une unité de traitement, en particulier pour réaliser le procédé selon l'une des revendications 1 à 10, **caractérisé en ce que** :
- des images de l'objet (1) peuvent être enregistrées avec la ou lesdites caméras (2, 2', 2") à des longueurs d'onde ou dans des domaines spectraux différents,
- pour produire l'image d'intensité, les signaux d'image d'une image enregistrée avec une haute résolution, de préférence d'une image englobant la totalité du spectre chromatique ou d'une image en noir et blanc ou d'une image en niveaux de gris, sont envoyés au dispositif de traitement (5),
- les signaux d'image d'au moins une autre image de l'objet enregistrée avec une résolution moindre par rapport à l'image d'intensité ou les signaux d'image réduits dans une unité de réduction (6) sont envoyés à une unité de chaînage et de transformation (8),
- les signaux d'image de l'image d'intensité sont envoyés par l'intermédiaire d'une unité de réduction (6') à l'unité de chaînage et de transformation (8), dans iaquelle les signaux d'image réduits de l'image d'intensité et de la ou lesdites autres images peuvent être chaînés au cours d'une transformation, de préférence une transformation de l'espace chromatique, et transformés ou assemblés en au moins une image de caractéristique chromatique, de préférence une image de chrominance ou une image de saturation, de faible résolution, et
- l'image d'intensité de haute résolution et au moins une image de caractéristique chromatique à résolution moindre sont présentes, en particulier stockées, dans l'unité de traitement (5) reliée à l'unité de chaînage et de transformation (8) en vue d'une utilisation ultérieure.

12. Dispositif selon la revendication 11, **caractérisé en ce que**, pour l'enregistrement des images de l'objet (1), il est prévu au moins deux, de préférence trois, caméras à niveaux de gris (2, 2', 2"), une image de l'objet (1) pouvant être enregistrée avec chacune des caméras (2, 2', 2"), de préférence en même temps, à une autre longueur d'onde ou dans un autre domaine spectral.

13. Dispositif selon la revendication 11 ou la revendication 12, **caractérisé en ce que** :
- au moins un filtre coloré (3, 3'), de préférence interchangeable, est disposé entre l'objet (1) et l'objectif d'au moins une caméra (2, 2', 2"),
- en particulier pour l'enregistrement d'images de l'objet (1), il est prévu un diviseur de faisceau (4) selon à peu près le même angle dans le chemin optique des faisceaux lumineux partant de l'objet (1), par exemple un miroir semi-transparent. avec lequel les faisceaux lumineux partant de l'objet (1) sont répartis sur les différentes caméras (2, 2').

14. Dispositif selon la revendication 11, **caractérisé en ce que**, pour l'enregistrement d'images avec une seule caméra (2"), au moins un filtre, de préférence une pluralité de filtres (3, 3', 3") laissant passer de la lumière de longueur d'onde différente ou de composition spectrale différente, peut être interposé dans le chemin optique entre l'objet (1) et la caméra (2"), le ou les filtres (3, 3', 3") étant le cas échéant maintenus de manière amovible dans un support et pouvant pivoter avec ce dernier dans le chemin optique, ou bien il est prévu un dispositif d'éclairement (9) avec lequel l'objet (1) peut être illuminé pour l'enregistrement des différentes images avec de la lumière de longueur d'onde différente ou de domaine spectral différent, un dispositif de commutation (10) placé le cas échéant en aval de la caméra unique (2") permettant d'amener les signaux d'image d'une image enregistrée à l'unité de traitement (5) et/ou à une unité de réduction (6).

15. Dispositif selon l'une des revendications 11 à 13, **caractérisé en ce que** :
- au moins une caméra (2, 2') présente une puce de capteur qui possède un nombre de points d'image réduit par rapport au nombre de points d'image de la puce de capteur de la caméra (2") prévue pour l'enregistrement de l'image d'intensité, et/ou
- une unité de réduction des signaux d'image (6, 6') est connectée à la puce de capteur de la caméra (2, 2') prévue pour l'enregistrement des autres images, unité dont la sortie est reliée à l'unité de chaînage ou de transformation (8).

16. Dispositif selon l'une des revendications 11 à 15, **caractérisé en ce qu'**une unité de positionnement électronique (7) est placée en aval des puces de capteurs des caméras (2, 2', 2") ou des différentes unités de réduction (6, 6'), unité par l'intermédiaire de laquelle, au moyen d'une transformation d'image géométrique électronique, les images enregistrées avec les différentes caméras (2, 2', 2") ou les points de l'objet reproduits sur la puce de capteur sont amenés à se recouvrir dans une position mutuelle prédéterminée, ou bien à l'aide de laquelle, lors de la reproduction des mêmes points de l'objet sur des points d'image différents des puces de capteurs de chacune des caméras (2, 2', 2"), une affectation réciproque de points de l'objet et de points d'image correspondants est effectuée au cours d'une transformation de position géométrique électronique.

17. Dispositif selon l'une des revendications 11 à 16, **caractérisé en ce que**, pour le transfert d'image et la division du chemin optique, des conduits de lumière sont placés entre l'objet (1) et les caméras (2, 2', 2") utilisées, lesquels enregistrent des images d'une seule et même zone de l'objet (1) et conduisent aux caméras (2, 2', 2") utilisées, au moins un filtre coloré (3, 3'), le cas échéant interchangeable, qui laisse passer une longueur d'onde ou un domaine spectral prédéterminé, étant disposé entre l'extrémité côté caméra d'au moins l'un des conduits de lumière et l'objectif de la caméra concernée.
